# EUROPEAN PATENT SPECIFICATION

(11) **EP 3 604 765 B1**
(45) Date of publication and mention of the grant of the patent: **19.06.2024**
(21) Application number: 18775182.1
(22) Date of filing: 23.03.2018
(51) Int. Cl.: F02C 3/24, F02C 3/22, F02C 7/16, F23J 7/00, F23K 5/00, F23R 3/28, F23R 3/30, B01D 53/94, F02C 3/14, F02C 7/141

(54) **COMBUSTION DEVICE AND GAS TURBINE**
VERBRENNUNGSVORRICHTUNG UND GASTURBINE
DISPOSITIF DE COMBUSTION ET TURBINE À GAZ

(30) Priority: 27.03.2017 JP 2017060444
(43) Date of publication of application: 05.02.2020
(73) Proprietor: IHI Corporation, Tokyo 135-8710 (JP)
(72) Inventor: ITO, Shintaro, Tokyo 135-8710 (JP); KATO, Soichiro, Tokyo 135-8710 (JP); UCHIDA, Masahiro, Tokyo 135-8710 (JP); ONISHI, Shogo, Tokyo 135-8710 (JP); MIZUTANI, Taku, Tokyo 135-8710 (JP); SAITOU, Tsukasa, Tokyo 135-8710 (JP); FUJIMORI, Toshiro, Tokyo 135-8710 (JP)
(74) Representative: TBK
(86) International application number: PCT/JP2018/011731
(87) International publication number: WO 2018/181002

(56) References cited:
- EP-A1- 2 378 096
- WO-A1-2010/082359
- JP-A- 2000 257 808
- JP-A- 2002 235 556
- JP-A- 2015 031 215
- JP-A- 2015 094 496
- JP-A- 2015 094 496

## Description

### Technical Field

The present disclosure relates to a combustion device and a gas turbine.

### Background

Patent Document 1 shown below discloses a combustion device and a gas turbine that combust ammonia as fuel. That is, the combustion device and the gas turbine obtain combustion exhaust gas that drives a turbine by premixing natural gas with ammonia (fuel ammonia) and by supplying it to a combustor, and form a reduction area on a downstream side of the inside of the combustor, in which nitrogen oxide (NOx) generated in a combustion area is reduced by ammonia for reduction, in order to decrease the nitrogen oxide (NOx). Patent Document 2 discloses a combustion device as in the preamble of claim 1. Patent Documents 3 and 4 disclose further prior art.

### Document of Related Art

### Patent Document

[Patent Document 1] Japanese Unexamined Patent Application, First Publication JP 2016 - 191 507 A
[Patent Document 2] JP 2015 - 094 496 A
[Patent Document 3] EP 2 378 096 A1
[Patent Document 4] JP 2002 235 556 A

### Summary

### Technical Problem

Incidentally, in the above related art, combustion air to be used for combustion combusts in a combustion chamber together with the fuel ammonia, and thus the temperature of a side wall configuring the combustion chamber becomes high. Therefore, heat deterioration of the side wall may be caused, and the life of the combustor may be shortened due to the heat deterioration.

The present disclosure is made in view of the above-described circumstances, and an object thereof is to limit temperature rise of members configuring the combustor that combusts fuel ammonia and to extend the life of the combustor.

### Solution to Problem

The object is solved by a combustion device according to claim 1.
Advantageous embodiments are disclosed in dependent claims 2 to 5. Further, the object is solved by a gas turbine comprising the combustion device according to any one of claims 1 to 5.

### Effects

According to the present disclosure, since the fuel ammonia supplied from the cooling ammonia supplier mixes with combustion air and flows into the combustor after cooling members configuring the combustor, it is possible to limit the temperature rise of the members configuring the combustor and to extend the life of the combustor.

### Brief Description of Drawings

FIG. 1 is a block diagram showing an overall configuration of a combustion device and a gas turbine of an embodiment of the present disclosure.
FIG. 2 is a cross-sectional view showing a configuration of a combustor of the embodiment of the present disclosure.

### Description of Embodiments

Hereinafter, an embodiment of the present disclosure will be described with reference to the drawings.

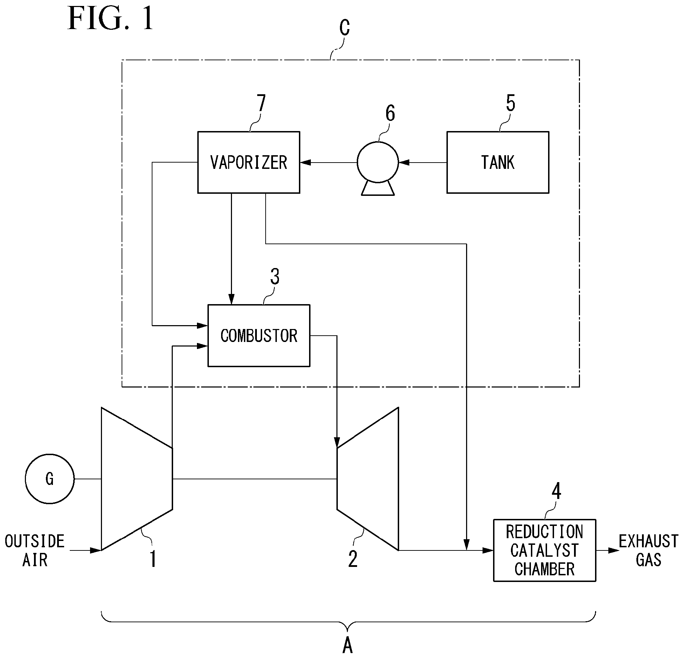

As shown in FIG. 1, a gas turbine A of this embodiment includes a compressor 1 (a combustion air-supplying source), a turbine 2, a combustor 3, a reduction catalyst chamber 4, a tank 5, a pump 6 and a vaporizer 7. Among these components, the combustor 3, the tank 5, the pump 6 and the vaporizer 7 are included in a combustion device C of this embodiment. The gas turbine A is a driving source for a generator G and generates rotational motive power by combusting ammonia that is a fuel.

The compressor 1 compresses air taken in from the outside air to a predetermined pressure and produces compressed air. The compressor 1 of this embodiment is an axial flow compressor. The compressor 1 supplies the compressed air to the combustor 3 mainly as combustion air. The combustor 3 combusts gaseous ammonia separately supplied from the vaporizer 7 as fuel. That is, the combustor 3 produces combustion gas by combusting the gaseous ammonia using the combustion air as an oxidizing agent and supplies the combustion gas to the turbine 2.

The turbine 2 generates rotational motive power by using the combustion gas as driving gas.

The turbine 2 is axially connected to the compressor 1 and the generator G as shown in the drawings and rotationally drives the compressor 1 and the generator G using its own rotational motive power. The turbine 2 discharges combustion gas after power recovery toward the reduction catalyst chamber 4. The inside of the reduction catalyst chamber 4 is filled with a reduction catalyst, and the reduction catalyst chamber 4 reduces nitrogen oxide (NOx) contained in the combustion gas to nitrogen (N₂) by reduction treatment.

The tank 5 is a fuel tank that has a predetermined volume and stores liquid ammonia, and supplies the liquid ammonia to the pump 6. The pump 6 is a fuel pump that pressurizes the liquid ammonia supplied from the tank 5 to a predetermined pressure and supplies it to the vaporizer 7. The vaporizer 7 can produce gaseous ammonia by vaporizing the liquid ammonia supplied from the pump 6.

The vaporizer 7 supplies ammonia to the combustor 3 as fuel (fuel ammonia).

Particularly, the vaporizer 7 can supply the fuel ammonia to a cooling ammonia supplier 3g described later as gaseous ammonia. In addition, the vaporizer 7 can supply the fuel ammonia to a main burner 3c described later as gaseous ammonia. The vaporizer 7 supplies gaseous ammonia to a position immediately before the reduction catalyst chamber 4 (namely, a position between the combustor 3 and the reduction catalyst chamber 4 in a flow passageway for combustion exhaust gas) as a reducing agent (ammonia for reduction). The reduction catalyst chamber 4 described above reduces the nitrogen oxide (NOx) by cooperation of the reduction catalyst housed thereinside and the ammonia for reduction.

Note that the vaporizer 7 can also supply liquid ammonia to the cooling ammonia supplier 3g without vaporizing liquid ammonia.

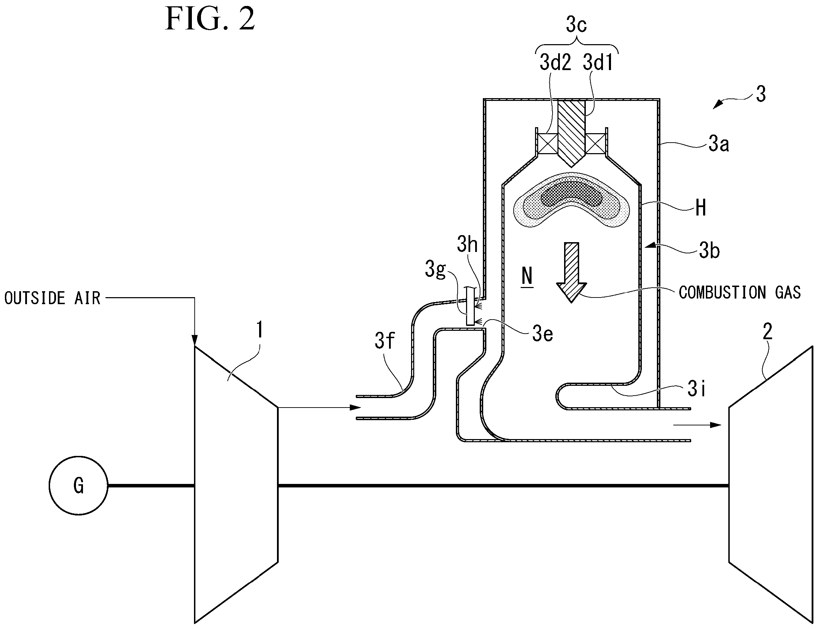

Here, the combustor 3 that is the most characteristic component among the above components in the gas turbine A and the combustion device C of this embodiment will be described in detail with reference to FIG. 2.

As shown in FIG. 2, the combustor 3 includes a casing 3a, a liner 3b, the main burner 3c, a compressed air-introducing port 3e, an introduction flow passageway 3f (flow passageway), the cooling ammonia supplier 3g and a scroll 3i. The main burner 3c includes a burner 3d1 and a flow adjuster 3d2. The vaporizer 7 described above is connected to the burner 3d1 and the cooling ammonia supplier 3g. The combustor 3 of this embodiment combusts fuel ammonia and combustion air inside a combustion chamber N described later.

The casing 3a is a substantially cylindrical container that houses the liner 3b. One end (one end in the central axis direction) of the casing 3a is attached with the burner 3d1 and the flow adjuster 3d2, and the other end of the casing 3a is provided with the scroll 3i. The liner 3b is provided inside the casing 3a and is a cylindrical body that connects the main burner 3c and the scroll 3i and that is provided substantially coaxially with the casing 3a. A gap is provided between the casing 3a and the liner 3b.

The scroll 3i (or a transition piece) is a member that connects the outlet of the liner 3b (the end on a far side from the main burner 3c in the central axis direction) and the inlet of the turbine 2 and that deflects the flow direction of the combustion gas flowing therein. The internal space formed by the liner 3b and the scroll 3i is the combustion chamber N. The combustion chamber N is formed by a side wall H, in other words, the side wall H forms the liner 3b and the scroll 3i. Note that the side wall H may configure at least part of the liner 3b or at least part of the scroll 3i. The direction of the arrow shown inside the combustion chamber N in FIG. 2 is the flow direction of the combustion gas in the combustion chamber N.

In the gap between the casing 3a and the liner 3b, combustion air flows toward the main burner 3c. The liner 3b is convection cooled (cooled by heat transfer) by combustion air (mixed gas) flowing on the outer surface of the liner 3b. The liner 3b is also cooled by film cooling or the like using a gas film formed inside the combustion chamber N (on the inner surface of the liner 3b) by air, that has passed through a plurality of cooling holes (not shown) provided in the liner 3b, flowing on the inner surface of the liner 3b. The combustion chamber N also has a cooling structure such as a plurality of effusion cooling holes (not shown) penetrating inward of the combustion chamber N. Note that the above cooling holes and the effusion cooling holes are not essential elements for the present disclosure and may not be provided in the combustor 3 of this embodiment.

The burner 3d1 is provided in the central axis of the liner 3b at one end of the casing 3a and is a nozzle that injects fuel into the combustion chamber N. The flow adjuster 3d2 is provided in an annular shape on the outer periphery of the burner 3d1 and supplies combustion air from one end of toward the inside of the combustion chamber N.

The compressed air-introducing port 3e is provided on a wall surface of the casing 3a and is connected to one end of the introduction flow passageway 3f (a first end, the downstream end in the flow direction of the combustion air). The other end of the introduction flow passageway 3f (a second end, the upstream end in the flow direction of the combustion air) is connected to the compressor 1. Therefore, the compressor 1 and the casing 3a communicate with each other through the introduction flow passageway 3f, and the introduction flow passageway 3f can supply the combustion air compressed by the compressor 1 into the casing 3a.

The cooling ammonia supplier 3g is provided at a position adjacent to the compressed air-introducing port 3e and is provided in the introduction flow passageway 3f. That is, the cooling ammonia supplier 3g of this embodiment is provided on the upstream side of the compressed air-introducing port 3e, and mixes fuel ammonia into combustion air and supplies the fuel ammonia into the combustor 3. The cooling ammonia supplier 3g protrudes from the outside of the introduction flow passageway 3f inward of the introduction flow passageway 3f and includes a cooling nozzle 3h exposed to the inside of the introduction flow passageway 3f. In the example shown in FIG. 2, a structure is shown in which the inside of the introduction flow passageway 3f is provided with two cooling nozzles 3h, but the number of the cooling nozzles 3h may be one or three or more. The cooling nozzle 3h mixes fuel ammonia into combustion air.

Further, a plurality of cooling ammonia suppliers 3g may be provided. The cooling nozzle 3h can inject the fuel ammonia supplied from the vaporizer 7 into the introduction flow passageway 3f. The cooling ammonia supplier 3g is positioned on the upstream side (at an upstream portion) of the side wall H in the flow direction of the combustion air. In other words, the cooling ammonia supplier 3g is positioned between the compressor 1 (the combustion air-supplying source) and the side wall H in the flow passageway for the combustion air.

Therefore, the cooling ammonia supplier 3g can mix fuel ammonia into the combustion air flowing in the introduction flow passageway 3f and can supply the mixed gas of the combustion air and the fuel ammonia toward the side wall H (the liner 3b and the scroll 3i) that forms the combustion chamber N. In this embodiment, the fuel ammonia supplied by the cooling ammonia supplier 3g is mixed with combustion air before combusting at the combustor 3.

Next, the time series operation of the gas turbine A and the combustion device C of this embodiment will be described in detail.

In the gas turbine A and the combustion device C, the pump 6 is operated to supply liquid ammonia from the tank 5 to the vaporizer 7, and the liquid ammonia is vaporized at the vaporizer 7 to produce gaseous ammonia. Then, part of the gaseous ammonia is supplied to the burner 3d1 and the cooling ammonia supplier 3g as ammonia for combustion (fuel ammonia), and the rest of the gaseous ammonia is supplied to a position immediately before the reduction catalyst chamber 4 as ammonia for reduction.

The ammonia for combustion supplied to the burner 3d1 is injected from the burner 3d1 into the combustion chamber N, namely into the inside of the liner 3b and the scroll 3i, along the central axis of the liner 3b.

The ammonia for combustion combusts in the combustion chamber N, and particularly, the temperature of the liner 3b and the scroll 3i that are the side wall H configuring the combustion chamber N rises.

On the other hand, the gaseous ammonia supplied to the cooling ammonia supplier 3g is injected from the cooling nozzle 3h inward of the introduction flow passageway 3f. The injected gaseous ammonia is mixed with the combustion air compressed by the compressor 1. The mixed gas of the gaseous ammonia and the combustion air mixed inside the introduction flow passageway 3f is supplied from the compressed air-introducing port 3e to the inside of the casing 3a (the gap between the casing 3a and the liner 3b) and cools the side wall H of the combustion chamber N in the process of being introduced into the combustion chamber N. The mixed gas is supplied into the combustion chamber N from the cooling holes provided in the liner 3b and the scroll 3i and from the main burner 3c and then combusts.

According to this embodiment, the mixed gas of combustion air and ammonia is used for the convection cooling by flowing along the outer surface of the side wall H of the combustion chamber N toward the main burner 3c or toward the cooling holes provided in the liner 3b and the scroll 3i, for the effusion cooling by part of the mixed gas flowing through the cooling holes to the inside of the side wall H, and for the film cooling by forming a film-shaped gas flow on the inner surface of the side wall H. By these cooling actions, the side wall H of the combustion chamber N is cooled. That is, the fuel ammonia is not only used for combustion but part of the fuel ammonia is also used for cooling ammonia, whereby the cooling efficiency to the side wall H of the combustion chamber N is improved, so that the life of the side wall H of the combustion chamber N can be extended.

The cooling by the mixed gas of gaseous ammonia and combustion air will be described more specifically.

Ammonia is known to have a greater specific heat than that of air. For example, at 500 °C, the specific heat of air is Cp = 1.1 kJ / (K · kg), whereas the specific heat of ammonia is Cp = 3.0 kJ / (K · kg). Therefore, the mixed gas of ammonia and combustion air has a characteristic that the temperature rise accompanying cooling is less than a case where only combustion air cools the side wall H of the combustion chamber N. Consequently, the cooling efficiency to the side wall H of the combustion chamber N is further improved by the mixed gas of ammonia and combustion air.

In addition, the temperature of gaseous ammonia is lower than the temperature of combustion air (compressed air) compressed by the compressor 1. Therefore, when gaseous ammonia is mixed into combustion air, the temperature of the mixed gas becomes lower than the temperature of the combustion air. As a result, the cooling efficiency to the side wall H of the combustion chamber N is improved by using the mixed gas as compared to a case where only combustion air cools the side wall H of the combustion chamber N.

For example, when the atmospheric temperature is 15 °C and the pressure of combustion air is 12 atm, the temperature of combustion air becomes about 390 °C, whereas the saturation temperature of ammonia gas is 100 °C or less at, for example, 20 atm. Thus, it is possible to reliably improve the cooling efficiency to the side wall H of the combustion chamber N by mixing ammonia into combustion air.

In addition, ammonia has an advantage not to easy cause a backfire, and thus the combustor 3 can be safely operated.

Hereinbefore, the embodiment of the present disclosure is described with reference to the drawings, but the present disclosure is not limited to the above embodiment. The shapes, combinations and the like of the components described in the above embodiment are merely examples, and various modifications can be adopted based on design requirements and the like within the scope of the present disclosure. For example, the following modifications can be considered.

(1) The above embodiment relates to a case where the present disclosure is applied to the combustion device C of the gas turbine A, but the present disclosure is not limited thereto. The combustion device of the present disclosure can be applied to various devices other than the gas turbine A, such as a boiler and an incineration facility. In the boiler, the incineration facility and the like, when using a compressor that compresses combustion air, a configuration other than an axial flow compressor (a centrifugal compressor, a reciprocating compressor or the like) may be used.
(2) The above embodiment describes a case where gaseous ammonia is supplied to the cooling ammonia supplier 3g, but liquid ammonia may be supplied to the cooling ammonia supplier 3g. In this case, the liquid ammonia supplied from the cooling ammonia supplier 3g is mixed into the combustion air in the introduction flow passageway 3f, and the combustion air is further cooled by the heat of vaporization when the liquid ammonia vaporizes. Therefore, the side wall H of the combustion chamber N configuring the combustor 3 can be more effectively cooled as compared to a case of mixing gaseous ammonia into combustion air.
(3) The cooling ammonia supplier 3g may be provided at a position such that ammonia directly reaches a high temperature portion of the side wall H. For example, the cooling ammonia supplier 3g may be disposed such that ammonia (gaseous or liquid ammonia) supplied from the cooling ammonia supplier 3g (the cooling nozzle 3h) directly contacts the high temperature portion of the side wall H. Note that the high temperature portion of the side wall H can be determined in advance by combustion experiments or the like using the combustor 3.
(4) As a countermeasure against backfire, a backfire detection thermometer may be provided at a position close to part of the introduction flow passageway 3f provided with the cooling ammonia supplier 3g.
(5) In the above embodiment, ammonia (ammonia for reduction) is used for a reducing agent, but the present disclosure is not limited thereto. Reducing agents other than ammonia (ammonia for reduction) may be used.
(6) In the above embodiment, the cooling ammonia supplier 3g has a shape protruding from the outside of the introduction flow passageway 3f inward of the introduction flow passageway 3f, but the present disclosure is not limited thereto. A shape in which a plurality of cooling nozzles 3h are provided on a wall surface (inner surface) of the introduction flow passageway 3f may be adopted therefor.
(7) In the above embodiment, fuel ammonia is used for fuel to be supplied to the main burner 3c, but the present disclosure is not limited thereto. A fuel (natural gas or the like) other than ammonia may be used for fuel to be supplied to the main burner 3c.

### Description of Reference Signs

A gas turbine
C combustion device
H side wall
N combustion chamber
1 compressor (combustion air-supplying source)
2 turbine
3 combustor
3a casing
3b liner
3c main burner
3d1 burner
3d2 flow adjuster
3e compressed air-introducing part
3f introduction flow passageway
3g cooling ammonia supplier
3h cooling nozzle
3i scroll
4 reduction catalyst chamber
5 tank
6 pump
7 vaporizer

## Claims

1. A combustion device (C) configured to be used for a gas turbine (A) comprising a compressor (1) and the combustion device (C), the combustion device (C) comprising:
a combustor (3) that combusts fuel ammonia and combustion air in a combustion chamber (N), wherein
the combustor (3) comprises:
a burner (3d1) that injects the fuel ammonia into the combustion chamber (N);
a cooling ammonia supplier (3g) that mixes the fuel ammonia into the combustion air and that supplies the fuel ammonia into the combustor (3); and
a side wall (H) that forms the combustion chamber (N), **characterized in that**
the cooling ammonia supplier (3g) is, in use, positioned downstream from the compressor (1) in a flow direction of the combustion air and between the compressor (1) and the side wall (H).

2. The combustion device (C) according to claim 1, wherein the cooling ammonia supplier (3g) is provided at a position such that the fuel ammonia directly reaches a high temperature portion of the side wall (H).

3. The combustion device (C) according to claim 1 or claim 2, wherein the cooling ammonia supplier (3g) comprises a cooling nozzle (3h) that injects the fuel ammonia, and
the cooling nozzle (3h) is configured to mix the fuel ammonia into the combustion air.

4. The combustion device (C) according to claim 1 or claim 2, wherein the cooling ammonia supplier (3g) comprises a plurality of cooling nozzles (3h) that inject the fuel ammonia, and
the plurality of cooling nozzles (3h) are provided in a flow passageway (3f) for the combustion air and are configured to mix the fuel ammonia into the combustion air.

5. The combustion device (C) according to claim 3 or 4, wherein the fuel ammonia to be injected from the cooling nozzle (3h) is liquid ammonia.

6. A gas turbine (A) comprising the combustion device (C) according to any one of claims 1 to 5.

## Patentansprüche

1. Verbrennungsvorrichtung (C), die konfiguriert ist, für eine Gasturbine (A) verwendet zu werden, die einen Verdichter (1) und die Verbrennungsvorrichtung (C) aufweist, wobei die Verbrennungsvorrichtung (C) Folgendes aufweist:
eine Verbrennungseinheit (3), die Brennstoffammoniak und Verbrennungsluft in einer Brennkammer (N) verbrennt, wobei
die Verbrennungseinheit (3) Folgendes aufweist:
einen Brenner (3d1), der das Brennstoffammoniak in die Brennkammer (N) einspeist;
eine Kühlammoniak-Zuführungseinheit (3g), die das Brennstoffammoniak in die Verbrennungsluft mischt und das Brennstoffammoniak in die Brennkammer (3) zuführt; und
eine Seitenwand (H), die die Brennkammer (N) ausbildet,
**dadurch gekennzeichnet, dass**
die Kühlammoniak-Zuführungseinheit (3g) bei Verwendung stromabwärtig von dem Verdichter (1) in einer Strömungsrichtung der Verbrennungsluft und zwischen dem Verdichter (1) und der Seitenwand (H) positioniert ist.

2. Verbrennungsvorrichtung (C) nach Anspruch 1, wobei die Kühlammoniak-Zuführungseinheit (3g) an einer Position vorgesehen ist, sodass das Brennstoffammoniak direkt einen Hochtemperaturbereich der Seitenwand (H) erreicht.

3. Verbrennungsvorrichtung (C) nach Anspruch 1 oder Anspruch 2, wobei die Kühlammoniak-Zuführungseinheit (3g) eine Kühldüse (3h) aufweist, die das Brennstoffammoniak einspeist, und
die Kühldüse (3h) konfiguriert ist, das Brennstoffammoniak in die Verbrennungsluft zu mischen.

4. Verbrennungsvorrichtung (C) nach Anspruch 1 oder Anspruch 2, wobei die Kühlammoniak-Zuführungseinheit (3g) eine Vielzahl von Kühldüsen (3h) aufweist, die das Brennstoffammoniak einspeisen, und
die Vielzahl von Kühldüsen (3h) in einem Strömungskanal (3f) für die Verbrennungsluft vorgesehen sind und konfiguriert sind, das Brennstoffammoniak in die Verbrennungsluft zu mischen.

5. Verbrennungsvorrichtung (C) nach Anspruch 3 oder 4, wobei das Brennstoffammoniak, das aus der Kühldüse (3h) einzuspeisen ist, flüssiges Ammoniak ist.

6. Gasturbine (A) mit der Verbrennungsvorrichtung (C) nach einem der Ansprüche 1 bis 5.

## Revendications

1. Dispositif de combustion (C) configuré pour être utilisé pour une turbine à gaz (A) comprenant un compresseur (1) et le dispositif de combustion (C), le dispositif de combustion (C) comprenant :
un combusteur (3) qui brûle le carburant ammoniac et l'air de combustion dans une chambre de combustion (N), dans lequel
le combusteur (3) comprend :
un brûleur (3d1) qui injecte le carburant ammoniac dans la chambre de combustion (N) ;
un fournisseur d'ammoniac de refroidissement (3g) qui mélange le carburant ammoniac à l'air de combustion et qui fournit le carburant ammoniac dans le combusteur (3) ; et
une paroi latérale (H) qui forme la chambre de combustion (N), **caractérisé en ce que**
le fournisseur d'ammoniac de refroidissement (3g) est, en utilisation, positionné en aval du compresseur (1) dans un sens d'écoulement de l'air de combustion et entre le compresseur (1) et la paroi latérale (H).

2. Dispositif de combustion (C) selon la revendication 1, dans lequel le fournisseur d'ammoniac de refroidissement (3g) est prévu à une position telle que le carburant ammoniac atteint directement une partie à haute température de la paroi latérale (H).

3. Dispositif de combustion (C) selon la revendication 1 ou la revendication 2, dans lequel le fournisseur d'ammoniac de refroidissement (3g) comprend une buse de refroidissement (3h) qui injecte le carburant ammoniac, et
la buse de refroidissement (3h) est configurée pour mélanger le carburant ammoniac à l'air de combustion.

4. Dispositif de combustion (C) selon la revendication 1 ou la revendication 2, dans lequel le fournisseur d'ammoniac de refroidissement (3g) comprend une pluralité de buses de refroidissement (3h) qui injectent le carburant ammoniac, et
la pluralité de buses de refroidissement (3h) sont prévues dans un passage d'écoulement (3f) pour l'air de combustion et sont configurées pour mélanger le carburant ammoniac à l'air de combustion.

5. Dispositif de combustion (C) selon la revendication 3 ou 4, dans lequel le carburant ammoniac à injecter à partir de la buse de refroidissement (3h) est de l'ammoniac liquide.

6. Turbine à gaz (A) comprenant le dispositif de combustion (C) selon l'une quelconque des revendications 1 à 5.
